(19) Europäisches Patentamt
European Patent Office
Office européen des brevets

(11) EP 4 455 204 A1

(12) **EUROPEAN PATENT APPLICATION**
published in accordance with Art. 153(4) EPC

(43) Date of publication:
**30.10.2024 Bulletin 2024/44**

(21) Application number: **22908932.1**

(22) Date of filing: **20.05.2022**

(51) International Patent Classification (IPC):
***C08L 17/00*** *(2006.01)* ***C08C 19/00*** *(2006.01)*
***C07C 45/30*** *(2006.01)* ***C08J 11/10*** *(2006.01)*
***C08L 9/06*** *(2006.01)* ***B29B 17/00*** *(2006.01)*
***C08J 5/00*** *(2006.01)*

(52) Cooperative Patent Classification (CPC):
Y02W 30/62

(86) International application number:
**PCT/BR2022/050170**

(87) International publication number:
**WO 2023/115173 (29.06.2023 Gazette 2023/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2021 BR 102021025716**

(71) Applicants:
- **De Souza, Luiz Felipe Rodomonte**
**04513-080 São Paulo, SP Brazil (BR)**
- **De Souza, Leonardo Campos Rodomonte**
**04513-080 São Paulo, SP Brazil (BR)**

(72) Inventor: **ALVAREZ, Bernardo Barreto**
**17250-000 São Paulo, SP Brazil 17250-000 São Paulo (BR)**

(74) Representative: **AWA Sweden AB**
**Box 5117**
**200 71 Malmö (SE)**

(54) **METHOD FOR RECYCLING ELASTOMERS, RECYCLED ELASTOMERS, AND USE OF THE RECYCLED ELASTOMERS**

(57) The present invention relates to a process for recycling solid waste from vulcanized elastomers based on sulphur or crosslinked with peroxides. In this context, the present invention proposes the recycling of said waste by means of radical de-crosslinking in the presence of ozone and de-crosslinking agents, without the use of high temperatures. The present invention also relates to recycled elastomers and the use of said recycled elastomers obtained by means of said process.

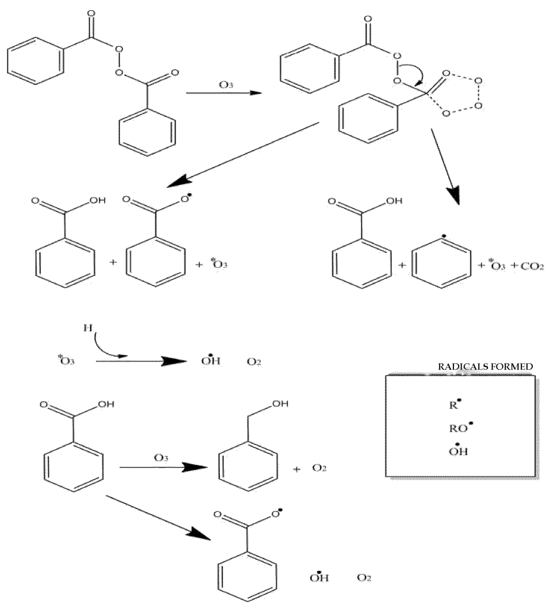


Figure 1

EP 4 455 204 A1

## Description

FIELD OF INVENTION

The present invention deals with a process for recycling solid waste of vulcanized elastomers based on sulphur or crosslinked with peroxides, as well as the recycled elastomers obtained through said process.

The present invention also relates to the use of recycled elastomers.

BACKGROUND OF THE INVENTION

Elastomers, due to their intrinsic characteristics related to crosslinking, generate waste from manufacturing and post-consumption that causes a serious environmental problem related to the disposal of vulcanized rubber, which is usually incinerated. In this context, rubber recycling consists of converting elastomers into processable materials that are compatible with virgin rubber.

The most efficient methods for recycling rubber involve breaking the cross-links by thermal, chemical or mechanical means, while the structure of the main chain remains intact. In this context, many processes known in the art, such as thermal, for example, present problems concerning the high temperatures used to break the cross-links in the elastomeric material to be recycled, which implies high energy consumption and degradation of the material to be regenerated, as well as unwanted secondary reactions. Furthermore, in the context of mechanical processes for recycling rubber, it is common for the high shear rates generally used to cause cross-links to break at random, generating recycled products that are unviable to be crosslinked again with virgin rubber.

Chemical recycling, on the other hand, aims to selectively break the cross-links and reduce the glass transition (Tg), allowing the polymer chains to become more mobile and enabling them to be incorporated into virgin elastomers. Depending on the efficiency of the vulcanization and/or crosslinking reactions carried out to obtain the virgin elastomer, the chemical recycling process can be more or less complex depending on the energy of the cross-links involved.

The vulcanization systems, for example, can be classified according to their sulphur and accelerator content and are considered efficient when the sulphur content is between 0.3 and 1.0 parts per hundred of rubber (per) and the accelerator content is between 2.0 and 6.0 parts per hundred of rubber (per). The efficient system induces the formation of monosulphidic (C-S-C) and disulphidic (C-S-S-C) bonds, which increase the thermal and oxidative stability of the material due to the presence of sulphur bonds with the polymer, which is also associated with the inability to exchange, rearrange or break, which does not allow the mechanical tension to be relieved without breaking the main chain. In this context, more energy will be required for the de-crosslinking reaction. Thus, it is common to use thermal and/or mechanical-chemical recycling methods that use chemical reagents associated with high temperatures and shear, which cause the problems related to material degradation and secondary reactions mentioned above, as well as increased costs due to the high and prolonged demand for energy. In this context, it is important to note that the maintenance of the desired mechanical properties and also the cost associated with the recycled elastomer are linked to its recycling process. In addition, according to the processes known in this context, it is normal to use large quantities of organic solvents, as well as compatibilizing agents.

In peroxide crosslinking processes, organic peroxides are used to crosslink rubbers that are saturated or do not contain any reactive group capable of forming crosslinks. Peroxides, as crosslinking agents, do not penetrate the polymer chain but produce radicals that form C-C bonds between adjacent chains in the polymer matrix. Peroxide crosslinking gained importance with the development of saturated synthetic rubbers such as EPM, EPDM, EVA, etc. The recycling alternatives that currently exist have limitations, as explained above, or are only efficient at de-crosslinking sulphur-based bonds and not at cleaving peroxide-based crosslinks, since the binding energy of C-C bonds is even higher than that of S-S and C-S bonds.

The state of the art includes documents that envisage the recycling of polymer waste, including elastomer waste, using ozone and other de-crosslinking agents.

Document US5373067A refers to a process for recycling polymeric materials based on ethylene vinyl acetate (EVA). In addition, this document suggests using recycled materials as a raw material in conjunction with virgin EVA. The essential purpose of US5373067A is to convert EVA residues without totally destroying the polymer, i.e. limiting it to a controlled cleavage of the molecule by breaking certain bonds without breaking the functional groups. To this end, the process of US5373067A comprises reducing the polymeric materials into a particulate form (i.e. involving a mechanical process), incorporating the polymeric particles obtained into an organic solvent suitable for diffusion within the polymeric network of the material and for dilation of said network, and subjecting the reaction medium to an ozone current as a de-crosslinking agent, leading to depolymerization of the initial material and creating active sites. With regard to the use of recycled elastomer as a raw material associated with virgin elastomer, this document demonstrates the feasibility of using only 20% of the recycled material to obtain a product with mechanical and rheological properties identical to virgin EVA.

The thesis entitled "*Reuse of crosslinked EVA waste through chemical recycling*" by Prestes, S. M. D., also deals

with the depolymerization of EVA waste. More specifically, this document deals with the recycling of EVA waste from the footwear sector for later reinsertion in the original segment itself. In this context, the document suggests using depolymerized EVA waste together with virgin PVC. Prestes, S. M. D. discloses different methods of chemical recycling, including de-crosslinking with hydrogen peroxide and de-crosslinking with ozone. The ozone recycling method showed the most satisfactory results and was conducted in a reaction medium containing 1,2,4 trichlorobenzene to swell the polymeric material.

Document CN109749757A discloses a recycled rubber/plastic waste product and a method for preparing it, also considering the technical problem of thermal degradation of the rubber polymeric material and the formation of impurities related to thermal medium. In this context, CN109749757A proposes a method for preparing a recycled rubber/plastic waste product comprising the combination of regeneration of waste rubber/plastic by thermal cracking and regeneration of waste rubber/plastic by non-thermal cracking. In this context, the incorporation of converted energy from the thermal process into the non-thermal cracking process is taught.

The article entitled "New Route for Devulcanization of Natural Rubber and the Properties of DevulcanizedRubber", by Rooj, et al, refers to the devulcanization of natural rubber using benzoyl peroxide as a de-crosslinking agent. In this context, Rooj, et al teach a chemical process and a mechanical-chemical process. In the chemical process, devulcanization is carried out in xylene and at a temperature of around 80°C. In addition, this document suggests revulcanizing rubber and using it in mixtures with virgin rubber in different proportions.

The article entitled "Assessment of the devulcanization process of EPDM waste from roofing systems by combined thermomechanical/microwave procedures", by Colom, et al, refers to the treatment of ethylene-propylene-diene rubber (EPDM) waste by combining thermomechanical and microwave devulcanization processes. In this context, Colom, et al also mention benzoyl peroxide as a de-crosslinking agent involving high processing temperatures.

Thus, the state of the art still lacks a process for recycling elastomers that doesn't require the use of high temperatures, special equipment and compatibilizing agents, and that covers a variety of elastomers, regardless of their original vulcanization/crosslinking processes, thus allowing the use of large quantities of recycled material in the manufacture of articles and, depending on the article to be formulated, even using 100% of the recycled elastomer.

As will be more fully detailed below, the present invention aims to solve the problems of the state of the art described above in a practical and efficient way.

## SUMMARY OF THE INVENTION

The present invention relates to a process for recycling solid elastomer waste without the use of high temperatures, special equipment and compatibilizing agents. More specifically, the present invention envisages a process comprising radical de-crosslinking conducted in the presence of ozone and a de-crosslinking agent in a solvent medium, as well as the recycled elastomer thus obtained.

The present invention also relates to the recycled elastomers obtained through the aforementioned process and their use in the manufacture of articles comprising them.

The purpose of the present invention is to provide a processing route for the chemical recycling of elastomers without decomposing the polymeric material. Therefore, it is also an object of the present invention to obtain recycled elastomers capable of significantly replacing virgin elastomer in compositions of new articles based on vulcanized rubber. In this context, this invention envisages the use of large quantities of the recycled elastomer obtained by the proposed process or even the manufacture of articles exclusively from recycled elastomers.

The aforementioned purposes and other advantages of the present invention will become clearer from the following description.

## BRIEF DESCRIPTION OF THE FIGURES

Figure 1 illustrates a radical formation route with benzoyl peroxide in the presence of ozone.
Figure 2 illustrates a radical formation route with a persulphate in the presence of ozone.
Figure 3 illustrates a radical formation route with styrene in the presence of ozone.
Figure 4 illustrates specimens consisting of virgin SBR and a blend of 30% by weight of virgin SBR with 70% by weight of recycled SBR.

## DETAILED DESCRIPTION OF THE INVENTION

The present invention relates to the chemical recycling of solid elastomers waste conducted at room temperature and in the presence of ozone and a de-crosslinking agent in a solvent medium.

More specifically, and unlike the existing state of the art, the present invention makes combined use of de-crosslinking agents and ozone as an initiator for the formation of free radicals in said de-crosslinking agent. These radicals attack the cross-links in the polymer matrix and thus promote its de-crosslink. In this context, ozone acts concomitantly in the process of de-crosslinking elastomers.

According to the present invention, the aforesaid de-crosslinking agent consists of a peroxide, a persulphate or mixtures of these or similar or, alternatively, a "reactive solvent".

Peroxides, for example, have a half-life (the time it takes for half the amount of mass to decompose at the operating temperature). In conventional processes of the art, based on the formation of radicals in peroxides at high temperatures, the concentration of radicals formed decreases due to the thermal decomposition of the peroxide. In this scenario, the formation of radicals in the presence of ozone becomes more efficient as it prevents the concentration of radicals from decaying over the half-life of the peroxide. In the case of persulphates, they generate extremely reactive free radicals but are even more sensitive to decomposition at high temperatures (in fact, decomposition occurs at temperatures around 40°C). The combined use of peroxides and/or persulphates or, alternatively, a "reactive solvent" as de-crosslinking agents and ozone as an initiator, enables the formation of free radicals that attack the cross-links in the polymer matrix. In this context, in addition to acting concomitantly in the de-crosslinking process, ozone makes radical formation even more efficient since it allows it to take place without the use of high temperatures and, therefore, without decomposition of the de-crosslinking agent and the polymeric material. Figures 1 and 2 show, respectively, the routes proposed for radical formation with benzoyl peroxide and with a persulphate, both in the presence of ozone.

In the case of both peroxides and persulphates, it is necessary to use a solvent as a vehicle to promote the impregnation of these agents into the elastomer's polymer matrix, and then for the reaction with ozone and the consequent attack on the crosslinks to take place. According to the present invention, the solvent is chosen according to the solubility parameter suitable for swelling the elastomer to be de-crosslinked.

Preferably, the solvent is selected from halogenated or aromatic organic solvents or mixtures of these or similar, most preferably toluene or xylene.

In polymers with covalent crosslinked chains, such as elastomers, the polymer matrix swells due to the compatibility of the solvent system. In this way, the solvent fluid is inserted between the elastomer chains without breaking any crosslinks. The solubility of polymers in solvents depends on the similarity or chemical affinity between them; said affinity being defined through solubility parameters that are used to predict the solubility of polymers. In order to dissolve or simply swell a polymer, the interactions between the segments of the polymer chain and the solvent must be greater than the solvent-solvent and polymer-polymer interactions.

A polymer with a high solubility parameter ($\delta$) requires a large amount of energy to separate its molecules. If a second compound with a low $\delta$ value is added to the first, its energy will not be sufficient to separate the high $\delta$ molecules, resulting in immiscibility (BARTON, 1983). As the solubility parameter relates the minimum internal energy required to separate molecules, it is possible to establish relationships between different solubility parameters and the formation of solutions of different molecules. For solutions, according to Hildebrand, the heat of mixing of a solvent and a solute is proportional to the square of the difference in solubility parameters, as shown in the formula below (CHARLES E. CARRAHER, 2003).

$$\Delta \boldsymbol{H}_m = V_s V_p \left(\delta_s - \delta_p\right)^2$$

where Vs and Vp are the partial volumes of solvent and polymer, defined as the mole fraction multiplied by the total volume.

Charles M. Hansen, in 1966, developed a correction to the Hildebrand parameter to evaluate the influence of intermolecular interaction forces on solubilization, creating parameters for each type of interaction. When it comes to polar fluids, there are three relevant intermolecular forces to consider:

- London dispersion forces (D) - are present in all non-polar molecules and sometimes even between polar molecules. London related these forces to the electronic movement in molecules. Instantaneous induced dipoles can induce the polarization of adjacent molecules, resulting in attractive forces.
- Permanent dipole forces (P) - a measure of the polar or electrostatic aspect of the molecule. Due to this distortion, one side of the molecule is more positive and the other is more negative, creating a dipole, where the negative end of the dipole of one molecule approaches the positive end of the dipole of another molecule.
- Hydrogen bridges (H) - are the strongest intermolecular forces and are a special type of permanent dipole. They occur when, in a molecule, a hydrogen atom is bonded to a very electronegative element such as fluorine, oxygen or nitrogen, forming a very strong dipole. The hydrogen proton is attracted to the negative regions of other similar molecules, resulting in a strong network of intermolecular bonds.

The equation proposed by Hansen for the solubility parameter δ for polar fluids, using the three intermolecular forces of attraction listed above, is:

$$\delta^2 = \delta_D^2 + \delta_H^2 + \delta_P^2$$

The distance D of the Hansen solubility parameters between a solvent and a polymer in the HANSEN solubility space is calculated by the relationship:

$$D = \left(4\left(\delta_{D_s} - \delta_{D_p}\right)^2 + \left(\delta_{P_s} - \delta_{P_p}\right)^2 + \left(\delta_{H_s} - \delta_{H_p}\right)^2\right)^{1/2}$$

The higher the value of one of the solubility parameters, the higher the energy associated with the intermolecular interactions represented by that parameter, and the higher will be the amount of energy required to separate its molecules.

The relative cohesive energy or *Relative Energy Difference* (RED) is the ratio between the radius of the solubility parameter or the distance D (which is the Hansen ratio), and the solubility parameter.

$$\text{RED} = \text{D}/\ \delta,$$

where:

RED < 1 indicates high polymer solvent affinity;
RED = 1 low polymer solvent affinity; and
RED > 1 there is no affinity between solvent and polymer.

Alternatively, this proposal also envisages the use of a "reactive solvent" in the aforementioned process as a de-crosslinking agent and to promote swelling of the polymer matrix. Thus, within the scope of the present invention, the aforementioned "reactive solvent" consists of a component that acts concomitantly as a vehicle and as a de-crosslinking agent. Thus, the "reactive solvent" is able to generate the radicals necessary for de-crosslinking in the presence of ozone.

In this context, a "reactive solvent" consists of solvents with RED less than 1. Preferably, the "reactive solvent" consists of compounds selected from the group of acrylates or methacrylates represented by the formula (I), styrene, divinylbenzene or mixtures of these or similar.

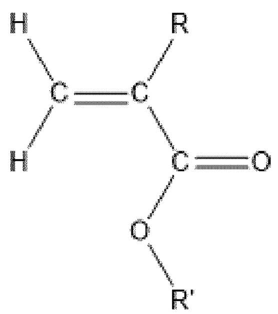

where R is hydrogen or $CH_3$ and R' is an alkyl group of 1 to 4 carbons.

Figure 3 shows a proposed route for radical formation with styrene in the presence of ozone.

In order to achieve the purposes described above, the present invention provides a process for recycling elastomers which comprises:

1) dissolving a de-crosslinking agent in a solvent and add the solution thus formed to the solid elastomer waste;
2) stirring followed by resting for a period of time depending on the particle size of the waste;
3) adding water; and
4) adding ozone.

In a preferred embodiment, a process is proposed for the chemical recycling of solid elastomer waste which comprises, in step 1), dissolving about 0.5 to about 30 parts (per 100 parts of waste) of a de-crosslinking agent in about 4 to

about 10 parts (per 100 parts of waste) of a solvent and adding the formed solution to the elastomer waste, where the de-crosslinking agent is selected from peroxides or persulphates, and wherein the solvent is selected from halogenated and/or aromatic organic solvents; in step 2), stir for about 30 minutes and rest for a period of time between 1 hour and 24 hours; in step 3), add up to 500 parts (per 100 parts of waste) of water and; in step 4), bubble ozone for a period of time between 4 hours and 6 hours at a flow rate of about 30 mg/L to about 50 mg/L.

Preferably, the peroxides are selected from the group consisting of benzoyl peroxide, dicumyl peroxide, oxybisperoxides and the like, or mixtures thereof; and persulphates are selected from the group consisting of ammonium persulphate, potassium persulphate, sodium persulphate and the like, or mixtures thereof.

Alternatively, the present invention proposes a process for recycling elastomers via "reactive solvents". In this case, the process is carried out in the presence of ozone and the "reactive solvent". In this context, the present invention provides a process for recycling elastomers which comprises:

1) preparing a solution comprising water, a surfactant and a "reactive solvent" and adding the solution formed to the solid elastomer waste;
2) stirring followed by resting for a period of time depending on the particle size of the waste; and
3) adding ozone.

In a preferred embodiment, a process for the chemical recycling of elastomer waste is proposed which comprises, in step 1), preparing a solution comprising up to 500 parts (per 100 parts of waste) of water, up to around 2.5 parts (per 100 parts of waste) of a surfactant and around 0.5 to 30 parts (per 100 parts of waste) of a "reactive solvent" and add the formed solution to the elastomer waste, wherein the surfactant is preferably selected from the group consisting of sodium lauryl ether sulfate and ethoxylated nonylphenols; in step 2), stir for about 30 minutes and rest for a period of time between 1 hour and 24 hours; and, in step 3), bubble ozone for a period of time between 4 hours and 6 hours at a flow rate of about 30 mg/L to about 50 mg/L.

The present invention also deals with recycled elastomers obtained through the processes proposed here.

In addition, the present invention proposes the use of recycled elastomers in the manufacture of articles in which said recycled elastomers are obtained by means of the processes defined here to replace the raw material consisting of the respective virgin elastomers in large quantities, greater than 60%. In addition, the present invention proposes the use of recycled elastomers obtained through the processes defined herein as a full replacement for the respective virgin elastomers, i.e. the use of 100% of recycled elastomers. In addition, the present invention proposes using the recycled elastomers obtained through the processes defined here to replace raw materials consisting of other polymers. In this context, the present invention envisages the use of recycled elastomers in the manufacture of articles for the footwear, construction, automotive and white goods industries, among others.

The examples presented illustrate the scope of the invention proposed here.

## EXAMPLES

Tests have been carried out in which it has been shown that the material recycled through the chemical recycling processes of the present invention has similar technical qualities to the corresponding virgin materials and, therefore, there is compatibility and miscibility of the recycled material with the initial polymer matrix.

### *Example 1: Density, hardness and abrasion resistance*

Table 1 shows the results of density, hardness and abrasion resistance tests carried out on a sample consisting of 70% by weight of SBR chemically recycled using the process of the present invention, using benzoyl peroxide as a de-crosslinking agent, and 30% by weight of virgin SBR compared to a virgin SBR sample.

*Table 1: Density, hardness and abrasion resistance tests for virgin SBR and virgin+recycled SBR samples.*

| | STANDARD | TEST |
|---|---|---|
| Virgin SBR (mg) | 500 | 150 |
| Recycled SBR (mg) | 0 | 350 |
| Zinc oxide | 25 | 25 |
| Sulphur | 12.5 | 12.5 |
| MBTS | 10.5 | 10.5 |
| TMTB | 2.5 | 2.5 |

(continued)

| | STANDARD | TEST |
|---|---|---|
| Density ($g/cm^3$) | 1.17 | 1.2 |
| Hardness (shore A) | 72 | 80 |
| Abrasion resistance ($mm^3$) | 154.4 | 373.5 |

As can be seen, the incorporation of recycled material did not affect the mechanical properties observed for the standard sample (in fact, these properties were improved). Figure 4 shows the appearance of the test specimens consisting of virgin SBR and a blend of 30% of virgin SBR with 70% of recycled SBR according to the present invention.

*Example 2: Elastic modulus, tension at break, elongation and hardness*

Table 2 shows the results of elastic modulus, tension at break, elongation and hardness (shore A) tests carried out on five samples consisting of virgin polymers and polymer blends chemically recycled using the processes of the present invention, using benzoyl peroxide and ammonium persulphate as the de-crosslinking agent, and styrene as the "reactive solvent", and their respective virgin polymers.

*Table 2: Elastic modulus, tension at break, elongation and hardness tests for virgin polymer and corresponding recycled polymer+virgin polymer samples*

| | 1 | 2 | 3 | 4 | 5 |
|---|---|---|---|---|---|
| **Black EPDM** | 70 | | | | |
| **Black EPDM recycled with peroxide** | | 70 | 100 | | |
| **Black EPDM recycled with persulphate** | | | | 70 | |
| **Black EPDM recycled with "reactive solvent"** | | | | | 70 |
| **Standard EPDM** | 30 | 30 | | 30 | 30 |
| | | | | | |
| **Elastic Modulus (Kgf)** | 3.4 | 4 | 3.8 | 3.5 | 3.5 |
| **Tension at Break (Kgf)** | 3.6 | 7.8 | 6.5 | 7.6 | 7.4 |
| **Elongation (%)** | 198 | 520 | 480 | 550 | 558 |
| **Hardness** | 45 | 60 | 68 | 62 | 65 |

The Black EPDM used is mostly composed of EPDM resin (however, there are blends with PE with a filler concentration of less than 25% by weight).

As can be seen, the incorporation of recycled materials did not affect the mechanical properties observed for the standard Black EPDM samples (in fact, these properties were improved). The Black EPDM material shows inferior properties compared to the same material when mixed with 70% by weight of the corresponding recycled material and also when compared to the sample consisting entirely of recycled Black EPDM material.

*Example 3: Differential Scanning Calorimetry (DSC) Analysis*

Tables 3 and 4 show, respectively, the parameters used and the results obtained through DSC analyses conducted for samples consisting of solid SBR waste chemically recycled through the processes of the present invention, compared to a sample of solid SBR waste without undergoing these processes, using benzoyl peroxide and ammonium persulphate as the de-crosslinking agent, and styrene as the "reactive solvent".

*Table 3: Parameters used for the DSC tests*

***DSC test conditions***

| STAGE | Temperature range (°C) | Heating rate (°C/min) | Gas used | Gas Flow (mL/min) |
|---|---|---|---|---|
| **1st Warm-up** | **-100 a 100** | **20** | N2 | **50** |

(continued)

***DSC test conditions***

| STAGE | Temperature range (°C) | Heating rate (°C/min) | Gas used | Gas Flow (mL/min) |
|---|---|---|---|---|
| **2nd Warm-up** | **-100 a 100** | **20** | N2 | **50** |
| **Sample holder:** Aluminum crucible | | | | |
| **Reference Standard:** AFINKO Internal Methodology | | | | |
| **Equipment:** Shimadzu DSC, model DSC-60 | | | | |

*Table 4: DSC tests for samples consisting of SBR waste and chemically recycled SBR waste*

| | Sample mass (mg) | 1st warm-up Tg(°C) | 2nd warm-up Tg(°C) |
|---|---|---|---|
| SBR Solid waste | 4.26 | -22.54 | -22.1 |
| SBR Solid waste recycled by peroxide | **5.44** | **-31.39** | -33.71 |
| SBR Solid waste recycled by persulphate | 5.3 | -30.28 | -30.79 |
| SBR Solid waste recycled by reactive solvent | **4.96** | **-29.98** | -31.62 |

The reduction in the Tg values of the samples analyzed demonstrates the efficiency of the de-crosslinking mechanisms proposed by the present invention. The data obtained confirms the greater mobility of the polymer matrix due to the reduction in intercrossing. It should be noted that the reduction in Tg shown in the DSC is associated with the breakdown of the crosslinks and not with the degradation of the polymer structure.

As can be seen from the examples above, the present invention makes it possible to achieve an effective chemical recycling process for elastomers that does not require the use of high temperatures, special equipment or compatibilizing agents and that covers a variety of elastomers regardless of their original vulcanization/crosslinking processes. Furthermore, this process allows large batches of waste to be recycled on a daily basis using relatively simple industrial plants. This being said, the invention proposed here promotes great savings in terms of energy consumption and reduces the need to consume elastomeric materials from non-renewable sources, since it provides a recycled residue that can significantly replace the virgin elastomer (virgin rubber) in mixing compositions of new vulcanized rubber-based articles. Thus, the proposed process is comprehensive and versatile, allowing the same industrial plant to be used to recycle several types of sulphur- or peroxide-based elastomer waste (e.g. crosslinked PE and PP, EPM, EPDM, EVA, SBR, etc).

Due to the more efficient de-crosslinking reactions achieved through the process proposed here, it is possible to use amounts of recycled material above 60% and, depending on the article to be formulated, it is possible for it to be formulated with up to 100% of the recycled elastomer. In addition, the recycled elastomer has the advantages of high compatibility and miscibility with the respective polymeric matrices and in mixtures with other polymers.

## Claims

**1.** Process for recycling elastomer waste, **characterized by** the fact that it comprises:

1) dissolving a de-crosslinking agent in a solvent and add the solution thus formed to the elastomer wastes, where the de-crosslinking agent is selected from peroxides, persulphates or similar or mixtures thereof;
2) promoting stirring followed by rest;
3) adding water; and
4) adding ozone.

**2.** Process according to claim 1, **characterized by** the fact that the amount of de-crosslinking agent is from about 0.5 to about 30 parts (per 100 parts of waste).

**3.** Process according to claim 1, **characterized by** the fact that peroxides are selected from the group consisting of benzoyl peroxide, dicumyl peroxide, oxybisperoxides and the like, or mixtures thereof.

**4.** Process according to claim 1, **characterized by** the fact that the persulphates are selected from the group consisting

of ammonium persulphate, potassium persulphate, sodium persulphate and the like, or mixtures thereof.

**5.** Process according to claim 1, **characterized by** the fact that the solvent is selected from the group consisting of halogenated or aromatic or similar organic solvents or mixtures thereof.

**6.** Process according to claim 5, **characterized by** the fact that the solvent is toluene and/or xylene.

**7.** Process according to claim 1, **characterized by** the fact that the amount of solvent is from about 4 to about 10 parts (per 100 parts of waste).

**8.** Process according to claim 1, **characterized by** the fact that, in step 2), stirring is conducted for a period of time of about 30 minutes and resting for a period of time between 1 hour and 24 hours.

**9.** Process according to claim 1, **characterized by** the fact that, in step 3), the amount of water is up to 500 parts (per 100 parts of waste).

**10.** Process according to claim 1, **characterized by** the fact that, in step 4), ozone is bubbled for a period of time between 4 hours and 6 hours at a flow rate of about 30 mg/L to about 50 mg/L.

**11.** Process for recycling elastomer waste, **characterized by** the fact that it comprises:

1) preparing a solution comprising water, a surfactant and a de-crosslinking agent and add the solution formed to the elastomer residues, where the de-crosslinking agent is a "reactive solvent";
2) promoting stirring followed by rest; and
3) adding ozone.

**12.** Process according to claim 11, **characterized by** the fact that the "reactive solvent" consists of solvents with RED less than 1.

**13.** Process according to claim 12, **characterized by** the fact that the "reactive solvent" consists of compounds selected from the group of acrylates or methacrylates represented by the formula (I), styrene, divinylbenzene and the like, or mixtures thereof

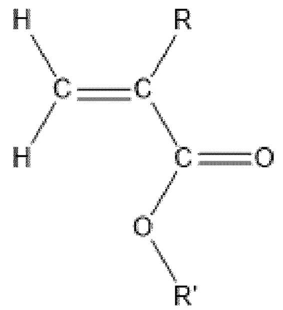

where R is hydrogen or CH3 and R' is an alkyl group of 1 to 4 carbons.

**14.** Process according to claim 11, **characterized by** the fact that the amount of "reactive solvent" is from about 0.5 to about 30 parts (per 100 parts of waste).

**15.** Process according to claim 11, **characterized by** the fact that the surfactant is preferably selected from the group consisting of sodium lauryl ether sulfate and ethoxylated or similar nonylphenols or mixtures thereof.

**16.** Process according to claim 11, **characterized by** the fact that the amount of surfactant is up to about 2.5 parts (per 100 parts of waste).

**17.** Process according to claim 11, **characterized by** the fact that the amount of water is up to 500 parts (per 100 parts of waste).

**18.** Process according to claim 11, **characterized by** the fact that, in step 2), stirring is conducted for a period of time of about 30 minutes and resting for a period of time between 1 hour and 24 hours.

**19.** Process according to claim 11, **characterized by** the fact that, in step 3), ozone is bubbled for a period of time between 4 hours and 6 hours at a flow rate of about 30 mg/L to about 50 mg/L.

**20.** Recycled elastomer, **characterized by** the fact that it is obtained by the process as defined in claim 1.

**21.** Recycled elastomer, **characterized by** the fact that it is obtained by the process as defined in claim 11.

**22.** Use of the recycled elastomer obtained by the process as defined in claim 1 or 11, **characterized by** the fact that it replaces the part of the raw material comprising virgin elastomers for making articles.

**23.** Use, according to claim 22, **characterized by** the fact that it is for making articles for the footwear, construction, automotive or white goods industries.

**24.** Use, according to claim 22, **characterized by** the fact that the amount of recycled elastomer used is equal to or greater than 60%.

**25.** Use, according to claim 22, **characterized by** the fact that it is in mixtures with other polymers.

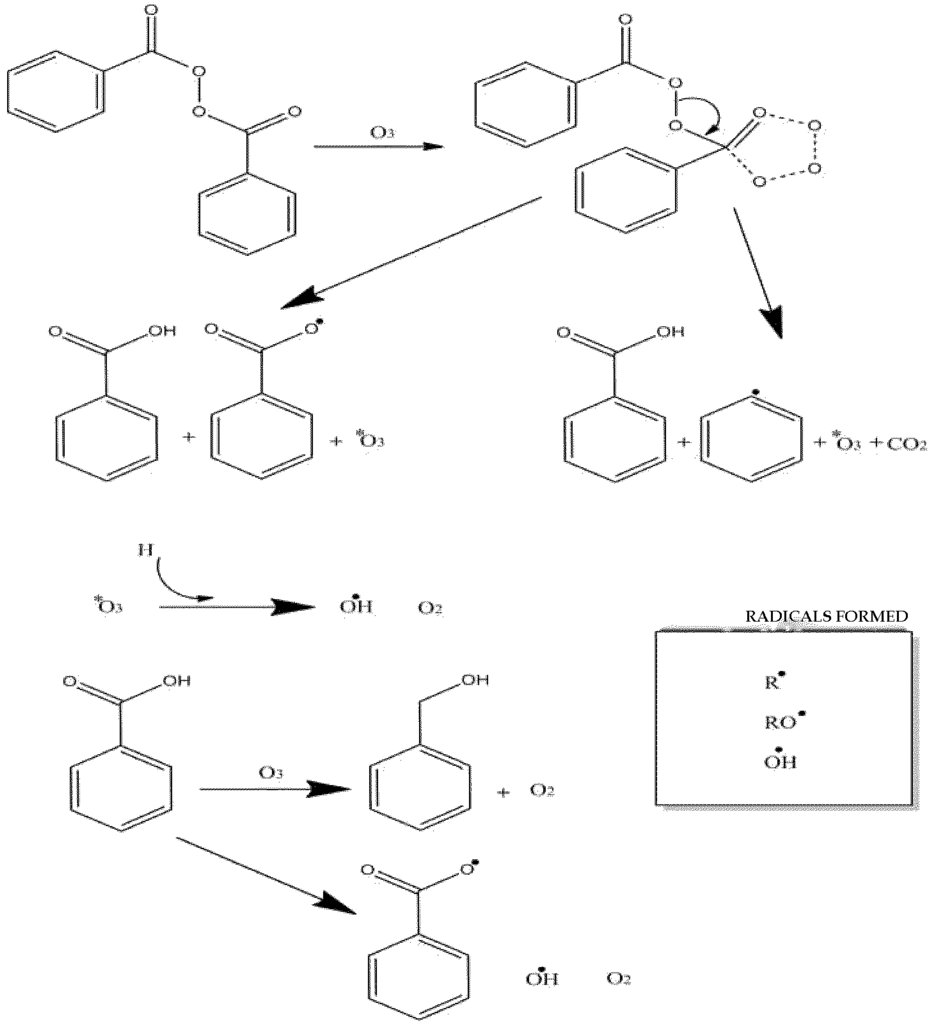


Figure 1

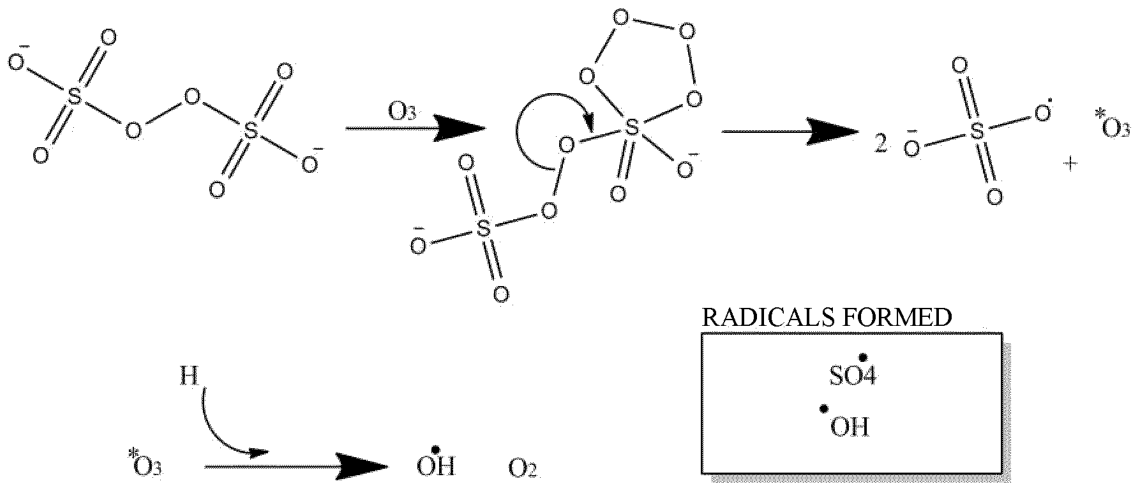


Figure 2

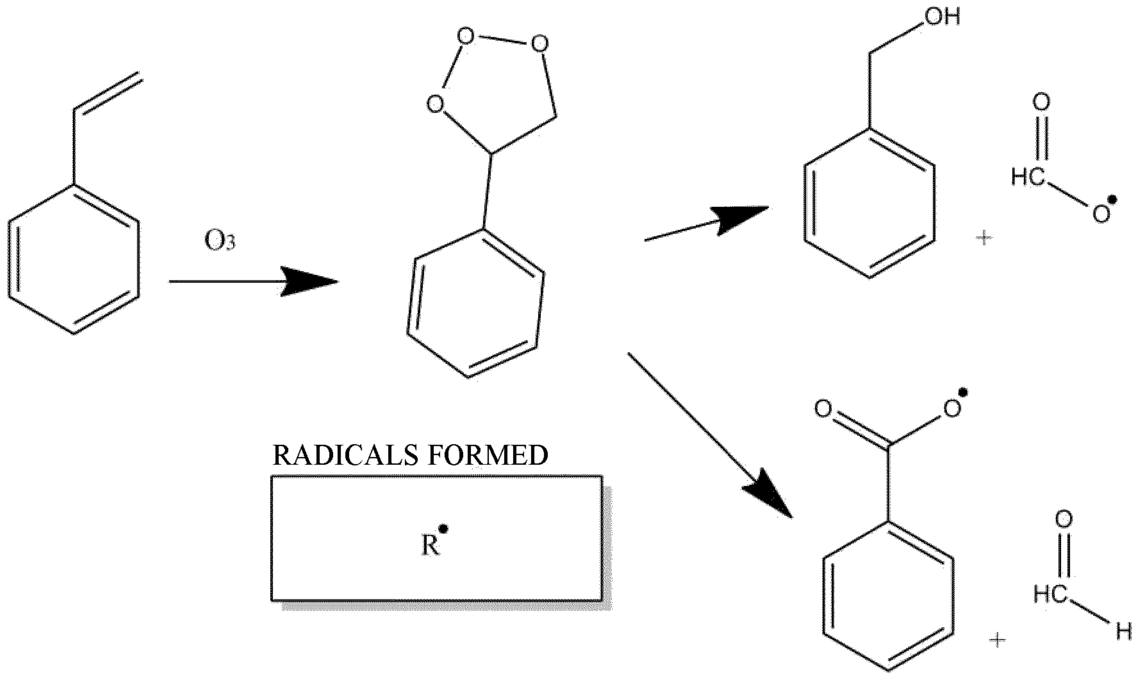


Figure 3

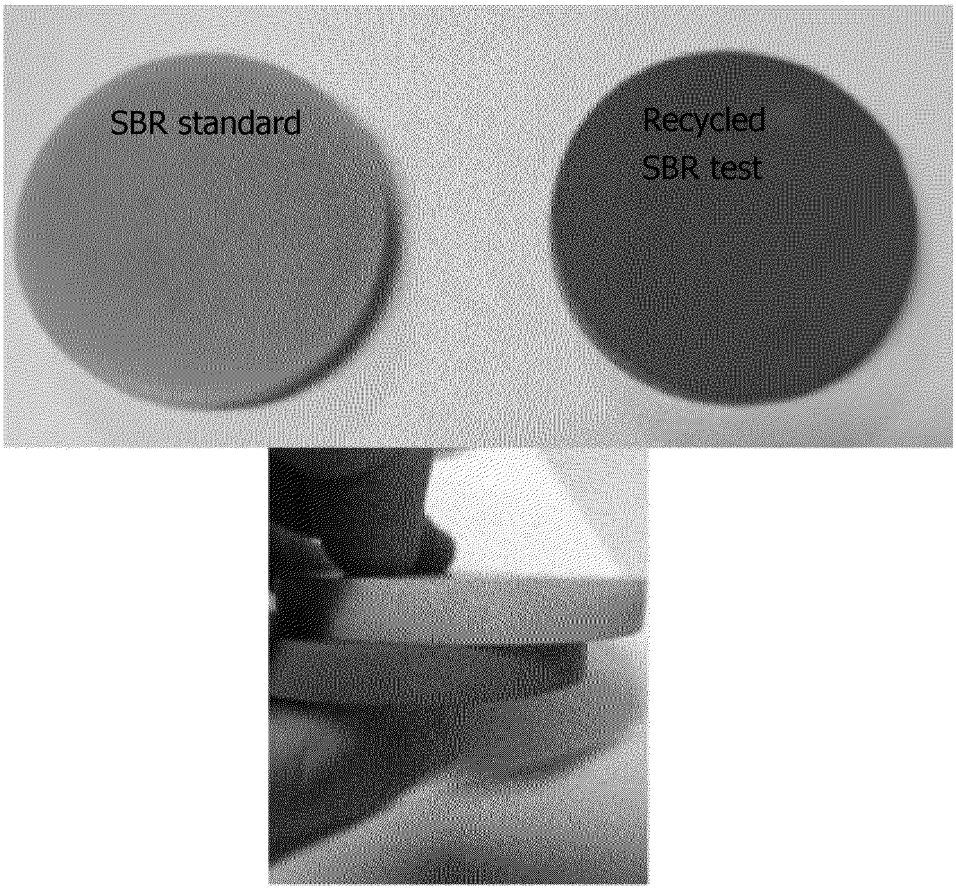


Figure 4

## INTERNATIONAL SEARCH REPORT

International application No. **PCT/BR2022/050170**

A. CLASSIFICATION OF SUBJECT MATTER

**IPC: C08L17/00 (2006.01), C08C 19/00 (2006.01), C07C45/30 (2006.01), C08J 11/10 (2006.01), C08L 9/06 (2006.01), B29B 17/00 (2006.01), C08J 5/00 (2006.01 )**

According to International Patent Classification (IPC) or to both national classification and IPC

B. FIELDS SEARCHED

Minimum documentation searched (classification system followed by classification symbols)

**C08L, C08C, C07C, C08J, B29B**

Documentation searched other than minimum documentation to the extent that such documents are included in the fields searched

**BANCO DE PATENTES DO INPI-BR**

Electronic data base consulted during the international search (name of data base and, where practicable, search terms used)

**EPODOC-INTERNAL; DERWENT INNOVATION/CLARIVATE**

C. DOCUMENTS CONSIDERED TO BE RELEVANT

| Category* | Citation of document, with indication, where appropriate, of the relevant passages | Relevant to claim No. |
|---|---|---|
| X | BR 9106056 A (GOODYEAR TIRE RUBBER [US]) 17 November 1992 (17.11.1992) Abstract. Pages 3-12. Claims nos. 1-19. | 1-25 |
| X | BR 9507160 A (GOODYEAR TIRE RUBBER [US]) 09 September 1997 (09.09.1997) Abstract. Pages 4-19. Claims nos. 1-11. | 1-25 |
| X | US 2021388174 A1 ( ECOLE NAT SUPERIEURE DINGENIEURS DE CAEN [FR]) 16 December 2021 (16.12.2021) Abstract. Paragraphs 4-63 ; 74-78 ; 92-158. Claims nos. 1-11. | 1-25 |
| X | WO 2011008297 A1 ( GRAVANO-DOERFFLER STEFANIE M [US]) 20 January 2011 (20.01.2011) Abstract. Paragraphs 1-24. Claims nos. 1-10. | 1-25 |

[X] Further documents are listed in the continuation of Box C. [X] See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 13 June 2022 | **21/06/2022** |

| Name and mailing address of the ISA/ | Authorized officer |
|---|---|
| INSTITUTO NACIONAL DA PROPRIEDADE INDUSTRIAL<br>Rua Mayrink Veiga nº 9, 6º andar<br>cep: 20090-910, Centro - Rio de Janeiro/RJ<br>Facsimile No. +55 21 3037-3663 | Telephone No. |

Form PCT/ISA/210 (second sheet) (January 2015)

**INTERNATIONAL SEARCH REPORT**

International application No.
PCT/BR2022/050170

C (Continuation). DOCUMENTS CONSIDERED TO BE RELEVANT

| Category* | Citation of document, with indication, where appropriate, of the relevant passages | Relevant to claim No. |
|---|---|---|
| Y | CN 108395573 A (UNIV FUZHOU) 14 August 2018 (14.08.2018) Abstract. | 1-25 |
| Y | CN 110655678 A (ANHUI CHUZHOU DEWEI NEW MAT CO LTD) 07 January 2020 (07.01.2020) Abstract. | 1-25 |
| A | EP 2028194 B1 (LANXESS DEUTSCHLAND GMBH [DE]) 12 May 2010 (12.05.2010) The whole document. | 1-25 |
| A | US 2021238483 A1 (VALGROUP S A [LU]) 05 August 2021 (05.08.2021) The whole document. | 1-25 |
| A | de Sousa, Fabiula; Zanchet, Aline (2018). *In the Search for Sustainable Processing in Compounds Containing Recycled Natural Rubber: The Role of the Reversion Process. Recycling, 3(4), 47–.* doi:10.3390/recycling3040047. The whole document. | 1-25 |
| A | Zanchet, Aline; de Sousa, Fabiula Danielli Bastos (2020). *Elastomeric Composites Containing SBR Industrial Scraps Devulcanized by Microwaves: Raw Material, Not a Trash. Recycling, 5(1), 3–.* doi:10.3390/recycling5010003. The whole document. | 1-25 |

Form PCT/ISA/210 (continuation of second sheet) (January 2015)

**INTERNATIONAL SEARCH REPORT**
Information on patent family members

International application No.
PCT/BR2022/050170

| | | | |
|---|---|---|---|
| BR 9106056 A | 1992-11-17 | AU 7311291 A | 1991-09-18 |
| | | CA 2024703 A1 | 1991-08-23 |
| | | DE 69122856 D1 | 1996-11-28 |
| | | EP 0516728 A1 | 1992-12-09 |
| | | JP H05504591 A | 1993-07-15 |
| | | JP 3005289 B2 | 2000-01-31 |
| | | KR 927003715 A | 1992-12-18 |
| | | KR 100190734 B1 | 1999-06-01 |
| | | US 5039737 A | 1991-08-13 |
| | | WO 9113117 A1 | 1991-09-05 |
| BR 9507160 A | 1997-09-09 | AU 1967395 A | 1995-10-09 |
| | | CA 2121638 A1 | 1995-09-22 |
| | | DE 69509378 D1 | 1999-06-02 |
| | | EP 0751975 A1 | 1997-01-08 |
| | | JP H09510498 A | 1997-10-21 |
| | | JP 3925939 B2 | 2007-06-06 |
| | | KR 970701761 A | 1997-04-12 |
| | | KR 100344137 B1 | 2002-11-09 |
| | | MX 9604156 A | 1997-12-31 |
| | | US 5424356 A | 1995-06-13 |
| | | US 5442007 A | 1995-08-15 |
| | | US 5442009 A | 1995-08-15 |
| | | WO 9525768 A1 | 1995-09-28 |
| US 2021388174 A1 | 2021-12-16 | CA 3129018 A1 | 2020-08-27 |
| | | CN 113710737 A | 2021-11-26 |
| | | EP 3927763 A1 | 2021-12-29 |
| | | FR 3092836 A1 | 2020-08-21 |
| | | JP 2022523192 A | 2022-04-21 |
| | | KR 20210132041 A | 2021-11-03 |
| | | WO 2020169589 A1 | 2020-08-27 |
| WO 2011008297 A1 | 2011-01-20 | EP 2454325 A1 | 2012-05-23 |
| | | US 2011015350 A1 | 2011-01-20 |
| | | US 8895667 B2 | 2014-11-25 |
| CN 108395573 A | 2018-08-14 | None | |
| CN 110655678 A | 2020-01-07 | None | |
| EP 2028194 B1 | 2010-05-12 | EP 2028194 A1 | 2009-02-25 |
| | | AT 467644 T | 2010-05-15 |
| | | BR PI0804882 A2 | 2010-06-15 |
| | | CN 101372518 A | 2009-02-25 |
| | | DE 602007006480 D1 | 2010-06-24 |
| | | EP 2028195 A1 | 2009-02-25 |
| | | JP 2009046681 A | 2009-03-05 |
| | | MX 2008010686 A | 2009-03-05 |
| | | US 2009054597 A1 | 2009-02-26 |
| | | US 8362154 B2 | 2013-01-29 |
| US 2021238483 A1 | 2021-08-05 | US 11225610 B2 | 2022-01-18 |

Form PCT/ISA/210 (patent family annex) (January 2015)

INTERNATIONAL SEARCH REPORT
Information on patent family members

International application No.
PCT/BR2022/050170

| | | | |
|---|---|---|---|
| | | BR 112022003629 A2 | 2022-05-24 |
| | | US 2021062093 A1 | 2021-03-04 |
| | | US 11015127 B2 | 2021-05-25 |
| | | WO 2021044228 A1 | 2021-03-11 |
| ------------------------------- | ---------------- | ------------------------------- | --------------- |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5373067 A
- CN 109749757 A


### Non-patent literature cited in the description


- **ROOJ**. *New Route for Devulcanization of Natural Rubber and the Properties of DevulcanizedRubber*
- **COLOM**. *Assessment of the devulcanization process of EPDM waste from roofing systems by combined thermomechanical/microwave procedures*